**Europäisches Patentamt**

**European Patent Office**

**Office européen des brevets**

(11) Veröffentlichungsnummer: **0 333 220**

**A2**

# EUROPÄISCHE PATENTANMELDUNG

(21) Anmeldenummer: **89104823.3**

(22) Anmeldetag: **17.03.89**

(51) Int. Cl.⁴: **B60R 1/06**

(30) Priorität: **18.03.88 DE 3809220**

(43) Veröffentlichungstag der Anmeldung:
**20.09.89 Patentblatt 89/38**

(84) Benannte Vertragsstaaten:
**DE ES FR GB IT**

(71) Anmelder: **Bayerische Motoren Werke Aktiengesellschaft Patentabteilung AJ-3 Postfach 40 02 40 Petuelring 130 D-8000 München 40(DE)**

(72) Erfinder: **Schlenz, Dieter, Dr.-Ing. Dorfstrasse 29a D-8081 Kottgeisering(DE)**
Erfinder: **Vaida, Ronald, Dipl.-Ing. Schlossbergstrasse 8 D-8081 Landsberied(DE)**
Erfinder: **Janssen, Lutz J., Dipl.-Ing. Friedastrasse 7E D-8000 München 71(DE)**

(74) Vertreter: **Draeger, Karlfried et al Bayerische Motoren Werke Aktiengesellschaft Postfach 40 02 40 Petuelring 130 - AJ 36 D-8000 München 40(DE)**

(54) **Aussenrückblickspiegel für Kraftfahrzeuge, insbesondere Personenkraftwagen.**

(57) Bei einem Außenrückblickspiegel für Kraftfahrzeuge, insbesondere Personenkraftwagen, mit einem die Spiegelscheibe aufnehmenden strömungsgünstig gestalteten Spiegelgehäuse und einem das Spiegelgehäuse tragenden, sich zumindest annähernd waagerecht im wesentlichen quer zur Fahrzeuglängsrichtung erstreckenden Haltearm, dessen Höhe wesentlich geringer als die des Spiegelgehäuses ist, sind der Haltearm und das Spiegelgehäuse derart gestaltet, daß bei Vorwärtsfahrt anströmende Luft nach unten und nach außen geleitet wird. Dadurch wird bei geringem Luftwiderstand und weitgehend vermiedener Spiegelverschmutzung erreicht, daß bei geschlossenem Seitenfenster einem Verschmutzen der Seitenfensterscheibe und bei geöffnetem Seitenfenster einem Strömen der Luft in den Fahrzeuginsassenraum entgegengewirkt wird.

Fig. 1

## Außenrückblickspiegel für Kraftfahrzeuge, insbesondere Personenkraftwagen

Die Erfindung betrifft einen Außenrückblickspiegel für Kraftfahrzeuge, insbesondere Personenkraftwagen, nach dem Oberbegriff des Patentanspruchs 1.

Bei einem aus der EP-A-177 458 bekannten Außenrückblickspiegel dieser Art ist der im Querschnitt runde Haltearm im unteren Bereich der dem Fahrzeugaufbau zugewandten Seitenwand des Spiegelgehäuses an diesem befestigt. Der Durchmesser des Haltearms ist etwa so groß wie seine Länge und etwa halb so groß wie die Höhe des Spiegelgehäuses, das wesentlich breiter als hoch ausgebildet ist. An dem fahrzeugaufbauseitigen Ende weist das Spiegelgehäuse in Draufsicht einen etwa U-förmigen Querschnitt auf. In der Betriebsstellung, in welcher das fahrzeugaufbauferne Ende des Spiegelgehäuses weiter hinten als das fahrzeugaufbaunahe Ende des Spiegelgehäuses angeordnet ist, ist demgemäß die dem Fahrzeugaufbau zugewandte Seitenwand des Spiegelgehäuses derart ausgerichtet, daß ihr hinterer Bereich eine geringere Entfernung von dem Fahrzeugaufbau als ihr vorderer Bereich aufweist. Mit diesem Außenrückblickspiegel ergibt sich bei seiner Anordnung in Höhe des unteren Bereichs des Seitenfensters unmittelbar oberhalb der Seitentürbrüstung beim Fahren mit geöffnetem Seitenfenster eine in den Fahrzeuginsassenraum gerichtete Luftströmung. Eine derartige Luftströmung ist als Zugluft schon bei mittleren Fahrgeschwindigkeiten sehr unangenehm. Bei höheren Fahrgeschwindigkeiten ist ein Fahren mit geöffnetem Seitenfenster insbesondere über längere Zeit hinweg im allgemeinen nur zu ertragen, wenn eine spezielle Schutzbekleidung getragen wird.

Bei einem aus der DE-A-33 43 197 bekannten Außenrückblickspiegel für Personenkraftwagen mit einem strömungsgünstig gestalteten Spiegelgehäuse und einem Spiegelfuß, mit dem der Außenrückblickspiegel an einem vorderen Abschnitt der Seitentür über deren Brüstung in Höhe des unteren Bereichs des Seitenfensters befestigt werden kann, wie es aus der DE-C-20 37 555 bekannt ist, ist das Spiegelgehäuse mit Abstand von dem Spiegelfuß angeordnet und durch zwei mit senkrechtem Abstand voneinander angeordnete Tragarme mit dem Spiegelfuß verbunden. Jeder der Tragarme hat einen zumindest annähernd flügelprofilförmigen Querschnitt. Die beiden Tragarme sind so ausgerichtet, daß sie bei Vorwärtsfahrt an ihnen vorbeiströmende Luft nach unten lenken. Mit diesem bekannten Außenrückblickspiegel soll einer Verschmutzung des Spiegelglases und des Fahrzeugseitenfensters entgegengewirkt und ein geringer Luftwiderstand erzielt werden. Auch mit diesem bekannten Außenrückblickspiegel ergibt sich jedoch bei geöffnetem Seitenfenster eine unerwünschte Fahrtwindströmung in den Fahrzeuginnenraum.

Ein anderer bekannter Außenrückblickspiegel für Personenkraftwagen (DE-U-73 18 062) mit einem Spiegelgehäuse und einem Haltearm ist derart an dem Fahrzeugaufbau angeordnet, daß sich die Spiegelfläche in Höhe des oberen Drittels, vorzugsweise des oberen Viertels des Seitenfensters befindet. Der sich waagerecht in Fahrzeugquerrichtung erstreckende Haltearm ist einerseits in entsprechender Höhe an dem Fahrzeugaufbau befestigt und trägt andererseits das Spiegelgehäuse, das etwa plattenartig ausgebildet ist und in Fahrtrichtung eine geringe Erstreckung aufweist und an seiner von der Spiegelfläche abgewandten, in Fahrtrichtung vorne befindlichen Rückseite mittig in dem unteren Bereich des Spiegelgehäuses mit dem Haltearm verbunden ist. Die Höhe des Haltearms ist wesentlich geringer als die des Spiegelgehäuses. Die Länge des Haltearms beträgt ein Mehrfaches seiner Höhe. Infolge der Höhenlage des Außenrückblickspiegels möglichst nahe dem Fahrzeugdach wird bei Vorwärtsfahrt verdrängte Luft in dem Bereich des Außenrückblickspiegels nach oben über das Fahrzeugdach abgelenkt. Dadurch soll vermieden werden, daß in der Luftströmung mitgeführte Schmutzteilchen mit der Fahrzeugseitenfensterscheibe in Berührung kommen und sich an dieser ablagern. Bei diesem bekannten Außenrückblickspiegel ergibt sich ebenfalls bei geöffnetem Seitenfenster eine unerwünschte Fahrtwindströmung in den Fahrzeuginnenraum.

Der Erfindung liegt die Aufgabe zugrunde, einen Außenrückblickspiegel der eingangs genannten Art zu schaffen, der ebenfalls einen geringen Luftwiderstand aufweist, einem Verschmutzen der Seitenfensterscheibe und der Spiegelscheibe entgegenwirkt und darüber hinaus einem Strömen von Fahrtwind bei Vorwärtsfahrt und geöffnetem Seitenfenster in das Fahrzeuginnere entgegenwirkt.

Die Lösung dieser Aufgabe ist in dem kennzeichnenden Teil des Patentanspruchs 1 angegeben. Durch sie wird erreicht, daß bei Vorwärtsfahrt die Luft beim Umströmen des vorderen Karosseriepfostens (A-Säule) nach unten und außen abgelenkt wird. Es ergeben sich bei geöffnetem Seitenfenster nur geringe Zugerscheinungen.

Eine besonders günstige Wirkung wird erzielt, wenn der Außenrückblickspiegel derart an einem Kraftfahrzeug angeordnet wird, daß der Haltearm mit erheblichem Abstand oberhalb der Seitentürbrüstung an dem Fahrzeugaufbau befestigt ist. Bei dieser Anordnung wird ein erheblicher Teil des Luftstromes, der um den vorderen Karosseriepfosten strömt, durch den in vorteilhafterweise nach unten offenen Luftführungskanal, der von dem Haltearm, dem Spiegelgehäuse und dem Fahrzeugaufbau gebildet ist, in der gewünschten Weise nach unten und außen gelenkt, so daß die unerwünschten Wirkungen des Fahrtwindes nicht oder nur in geringem Maße eintreten können.

Vorteilhafte Weiterbildungen der Erfindung sind in den Unteransprüchen gekennzeichnet. Mit ihnen verbundene Vorteile ergeben sich aus der nachfolgenden Beschreibung.

In der Zeichnung sind Ausführungsbeispiele der Erfindung schematisch dargestellt, und zwar zeigt

Fig. 1 einen Außenrückblickspiegel für Personenkraftwagen in Ansicht von hinten,

Fig. 2 den Außenrückblickspiegel nach Fig. 1 in Draufsicht,

Fig. 3 die gegenseitige Zuordnung von Spiegelgehäuse und Haltearm des Außenrückblickspiegels nach Fig. 1 und 2 in einem Querschnitt,

Fig. 4 die Anordnung des Außenrückblickspiegels nach Fig. 1 bis 3 an einem Personenkraftwagen in Seitenansicht,

Fig. 5 die Anordnung nach Fig. 4 in Draufsicht,

Fig. 6 einen anderen Außenrückblickspiegel für Personenkraftwagen in Ansicht von hinten und

Fig. 7 die gegenseitige Zuordnung von Spiegelgehäuse und Haltearm des Außenrückblickspiegels nach Fig. 6 in einem Querschnitt.

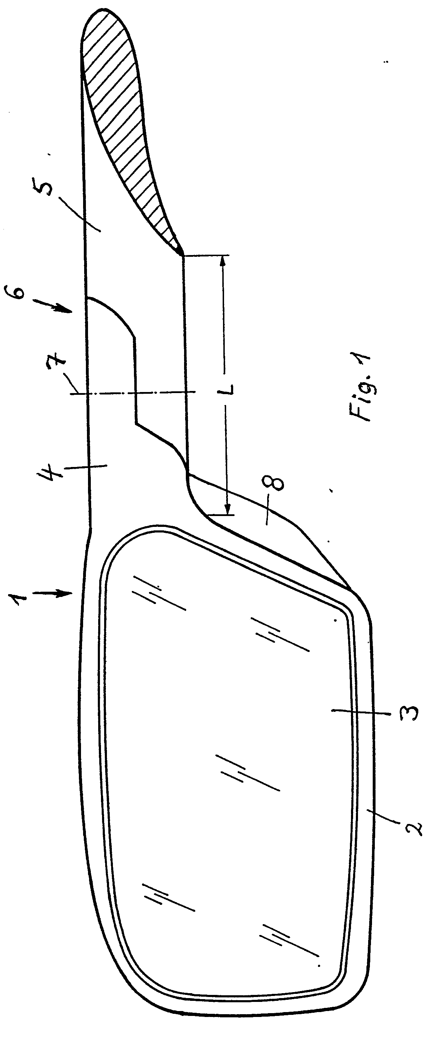

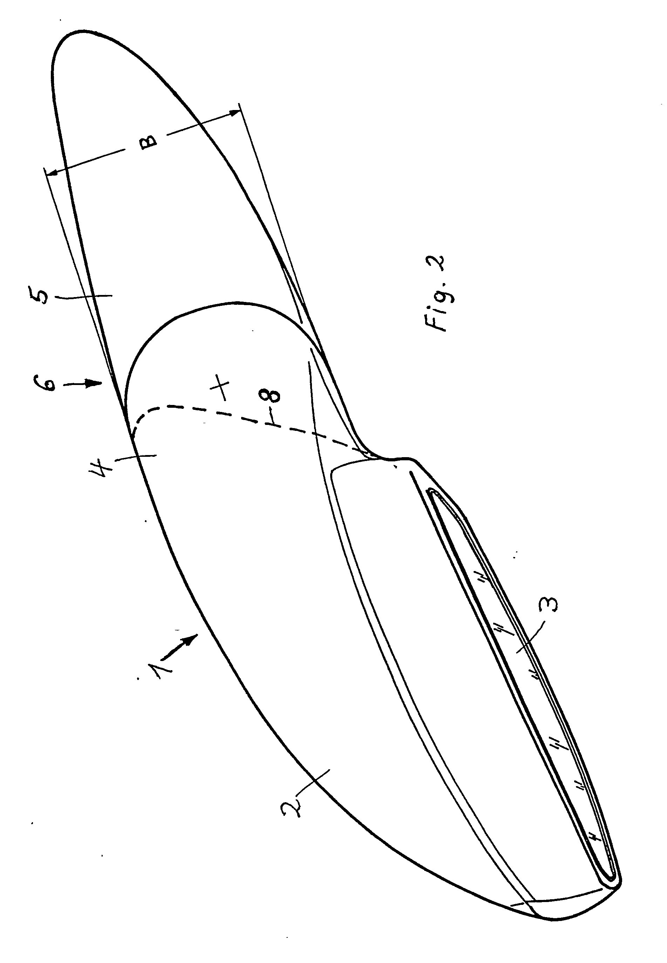

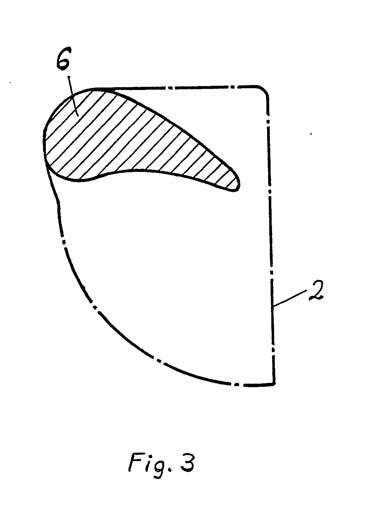

Bei dem Ausführungsbeispiel nach Fig. 1 bis 5 weist ein Außenrückblickspiegel 1 für die linke Fahrzeugseite ein Spiegelgehäuse 2 mit Spiegelscheibe 3 auf. Spiegelgehäuse 2 und Spiegelscheibe 3 sind wesentlich breiter als hoch ausgebildet. Die Spiegelscheibe 3 kann einstellbar in dem Spiegelgehäuse 2 gehalten sein. Die Spiegeleinstellung kann beispielsweise motorisch, z.B. von dem Fahrzeuginneren aus, bewirkt werden. Das Spiegelgehäuse 2 ist in üblicher Weise strömungsgünstig gestaltet, weist also einen möglichst geringen Luftwiderstand auf. Auf der fahrzeugaufbaunahen Seite des Spiegelgehäuses 2 ist an dieses in dem oberen Gehäusebereich ein Gehäuseteil 4 einstückig angeformt, das gemeinsam mit einem Halteteil 5 einen ebenfalls strömungsgünstig gestalteten Haltearm 6 bildet. Gehäuseteil 4 und Halteteil 5 sind um eine zumindest annähernd lotrecht verlaufende Schwenkachse 7 gegeneinander schwenkbar, so daß bei an einem Fahrzeugaufbau befestigtem Halteteil 5 das Spiegelgehäuse 2 aus der Betriebsstellung, in der es im wesentlichen quer zur Fahrzeuglängsrichtung ausgerichtet ist, nach hinten in eine Ausweichstellung geschwenkt werden kann, in der es sich im wesentlichen in Fahrzeuglängsrichtung erstreckt.

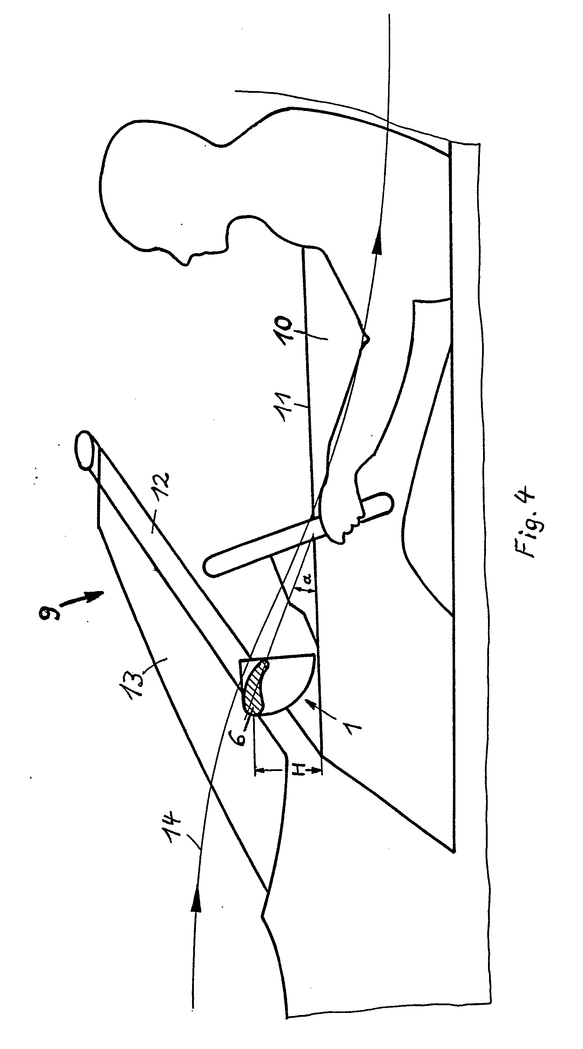

Der schlank ausgebildete Haltearm 6 weist einen flügelprofilförmigen Querschnitt mit nach hinten abnehmender Dicke auf. Seine Vorderseite ist zu der Vorderseite des Spiegelgehäuses 2 in dessen oberem Bereich bündig angeordnet. Seine Oberseite verläuft in seinem vorderen Bereich, also an seiner höchsten Stelle, etwa bündig mit der Oberseite des Spiegelgehäuses 2. Nach hinten zu ist der Haltearm 6 leicht nach unten geneigt ausgerichtet. Der Neigungswinkel der Profilsehne schließt mit der Waagerechten einen Neigungswinkel alpha von 18° ein (Fig. 4).

Die Dicke des Haltearms 6 ist wesentlich geringer als die Höhe des Spiegelgehäuses 2. Die größte Dicke des Haltearms 6 beträgt nur etwa ein Drittel der Höhe des Spiegelgehäuses 2. In Anströmrichtung weist der Haltearm 6 eine größere Erstreckung auf. Seine Breite ist etwa doppelt so groß wie seine größte Dicke und kann beispielsweise 70 mm betragen. In dieser Richtung erstreckt sich der Haltearm 6 annähernd über die gleiche Strecke wie das Spiegelgehäuse 2. Die Länge L des Haltearms 6 ist etwa eineinhalbmal so groß wie seine Breite B und kann beispielsweise 100 mm betragen. Sie ist annähernd so groß wie die Höhe des Spiegelgehäuses 2.

Die dem Fahrzeugaufbau zugewandte Seitenwand 8 des Spiegelgehäuses 2 ist im wesentlichen in Fahrzeuglängsrichtung ausgerichtet. Ihr Abstand von dem ihr benachbarten Fahrzeugaufbauteil ist über ihre Länge in Fahrzeuglängsrichtung hinweg annähernd gleich. Auch in Höhenrichtung ist ihr Abstand von dem ihr benachbarten Aufbauteil über ihre gesamte Höhe hinweg annähernd gleich. Sie verläuft also sowohl in Fahrzeuglängsrichtung als auch in Höhenrichtung den ihr benachbarten seitlichen Teilen des Fahrzeugaufbaus entsprechend geneigt. Das Spiegelgehäuse 2 mit seiner Seitenwand 8, der Haltearm 6 und die dem Außenrückblickspiegel 1 benachbarten Fahrzeugaufbauteile bilden demgemäß einen nach unten offenen Luftführungskanal mit über seine Länge annähernd gleichbleibendem Querschnitt. Dessen Breite wird durch die Länge L des Haltearms 6 bestimmt, die nicht zu gering bemessen sein sollte, damit sich die gewünschte Leitwirkung ergibt.

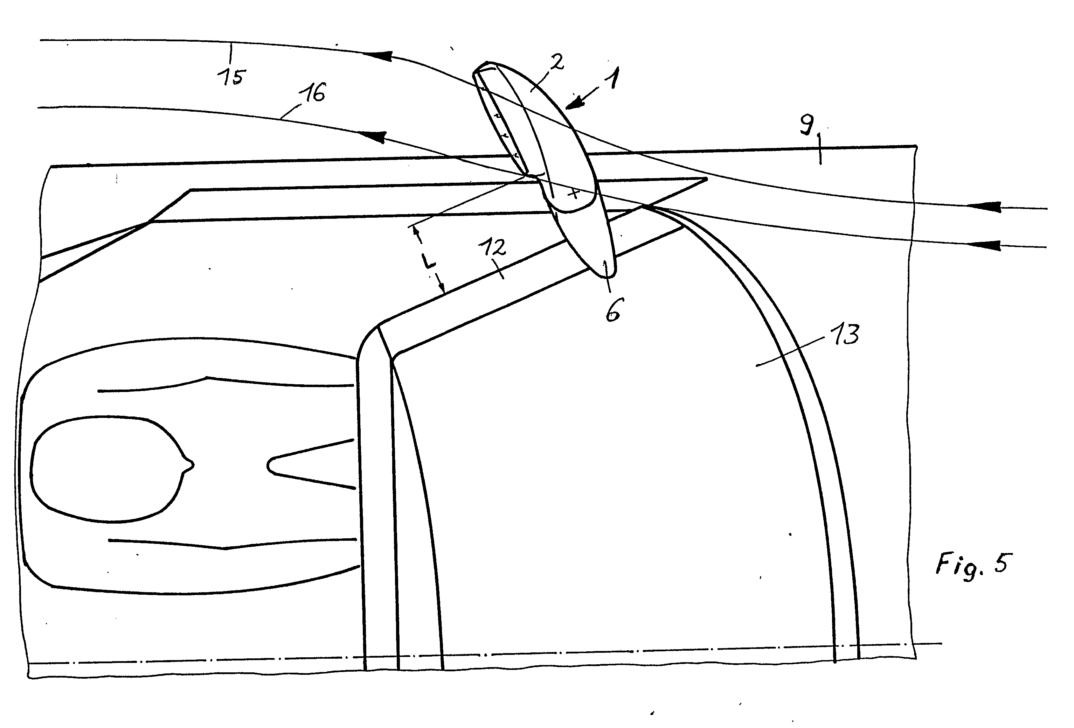

Nach Fig. 4 und 5 ist der Außenrückblickspiegel 1 an einem Personenkraftwagen 9 mit offenem Aufbau befestigt, dessen Seitentüren 10 als Hubtüren ausgebildet sind (DE-PS 36 25 936). Der Haltearm 6 ist mit erheblichem Abstand in Höhenrichtung oberhalb der Seitentürbrüstung 11 an dem vorderen Karosseriepfosten 12 (A-Säule), an den die Windschutzscheibe 13 anschließt, derart befestigt, daß er sich zumindest annähernd waagerecht im wesentlichen quer zur Fahrzeuglängsrichtung mit einer geringen Neigung von der Befestigungsstelle aus nach hinten erstreckt. Die Höhe H, in welcher der Haltearm 6 oberhalb der Seitentürbrüstung 11 angeordnet ist, ist derart bemessen, daß sich die Unterkante des Spiegelgehäuses 2 nur geringfügig oberhalb der Höhe der Seitentürbrüstung 11 befindet.

Bei Vorwärtsfahrt wird die anströmende Luft durch den Außenrückblickspiegel 1 mit seinem Spiegelgehäuse 2 und seinem Haltearm 6 nach unten gelenkt, und zwar nicht nur der Anteil der anströmenden Luft, der unterhalb des Haltearms 6 entlang strömt, sondern wegen der gewölbten Flügelkontur des Haltearms 6 auch ein Anteil der Luft oberhalb des Haltearms 6, wie es in Fig. 4 mit der Luftströmungslinie 14 angedeutet ist. Gleichzeitig wird die anströmende Luft zur Seite von dem Fahrzeugaufbau weg gelenkt, wie es in Fig. 5 durch die Luftströmungslinien 15, 16 angedeutet ist. Bei geschlossenem Seitenfenster wirkt der Außenrückblickspiegel 1 demgemäß einem Verschmutzen der Seitenfensterscheibe entgegen. Bei geöffnetem Seitenfenster, bei dem die Seitenfensterscheibe in den Türkorpus abgesenkt ist und die Seitentürbrüstung 11 die obere seitliche Fahrzeugbegrenzung bildet, bewirkt der Außenrückblickspiegel 1 ein Leiten der anströmenden Luft von dem Fahrzeuginsassenraum weg, so daß sich in diesem keine oder nur eine geringe Zugerscheinung auswirken kann. In der gleichen Weise wirkt der Außenrückblickspiegel 1 als Luftleitelement bei einem Fahren mit geöffneter, also abgesenkter Seitentür 10.

In Abweichung von dem Ausführungsbeispiel sind zahlreiche Abwandlungen möglich. Die Hauptabmessungen Länge L, Breite B und Dicke, der Neigungswinkel alpha, die Höhe H und die Profilform stehen in Wechselwirkung mit der Formgebung der Bauteile, die sich in der Nähe des Außenrückblickspiegels befinden, wie Windschutzscheibe, A-Säule, Brüstungskontur und Seitenfensterscheibenlage. Die zu dem Ausführungsbeispiel angegebenen Werte haben sich bei einem gegebenen Fahrzeug als besonders vorteilhaft erwiesen. Die angestrebte Luftführung ist jedoch auch zu erzielen, wenn Abweichungen von den angegebenen Werten innerhalb einer Bandbreite von +/- 30 % der angegebenen Werte liegen. Die Höhe H kann dabei erheblich von dem Wert des Ausführungsbeispiels abweichen.

Die dem Fahrzeugaufbau zugewandte Seitenwand des Spiegelgehäuses kann derart ausgerichtet sein, daß ihr Abstand von dem ihr benachbarten Fahrzeugaufbauteil von vorne nach hinten zunimmt, der von ihr, dem Haltearm und dem benachbarten Fahrzeugaufbauteil gebildete nach unten offene Luftführungskanal demgemäß bei Vorwärtsfahrt als Diffusor wirkt. Dies fördert die Ablenkwirkung. Auch nach unten zu kann sich der Luftführungskanal aufweiten, so daß sich auch in dieser Richtung eine Diffusorwirkung ergibt.

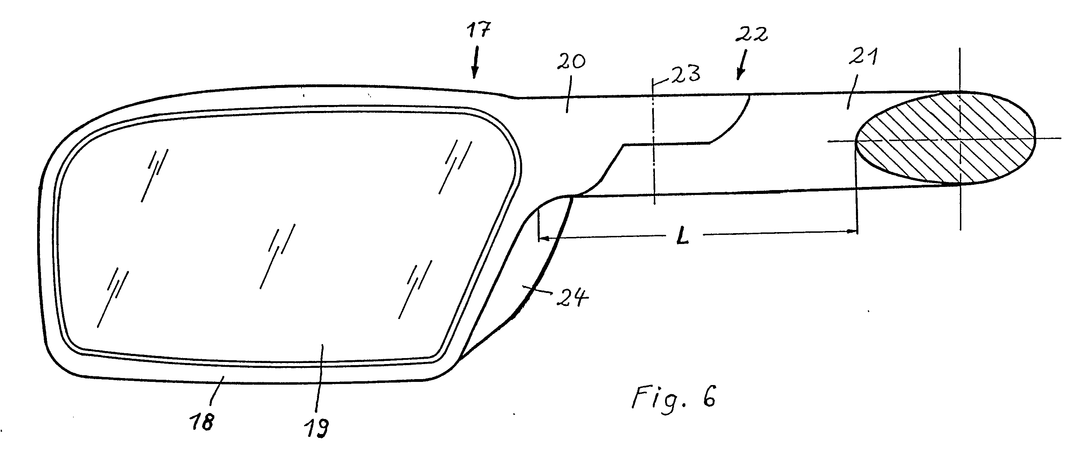

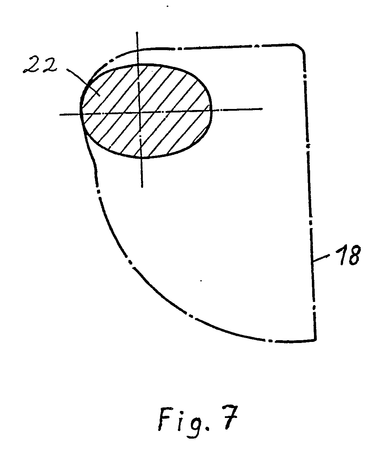

Der Außenrückblickspiegel nach Fig. 6 und 7 unterscheidet sich von dem nach Fig. 1 bis 5 im wesentlichen durch die Gestaltung seines Haltearms und die Ausrichtung der dem Fahrzeugaufbau zugewandten Seitenwand des Spiegelgehäuses.

Bei dem Ausführungsbeispiel nach Fig. 6 und 7 weist ein Außenrückblickspiegel 17 für die linke Fahrzeugseite ein Spiegelgehäuse 18 mit Spiegelscheibe 19 auf. Spiegelgehäuse 18 und Spiegelscheibe 19 sind wesentlich breiter als hoch ausgebildet. Die Spiegelscheibe 19 kann einstellbar in dem Spiegelgehäuse 18 gehalten sein. Die Spiegeleinstellung kann beispielsweise motorisch, z.B. von dem Fahrzeuginneren aus, bewirkt werden. Das Spiegelgehäuse 18 ist in üblicher Weise strömungsgünstig gestaltet, weist also einen möglichst geringen Luftwiderstand auf. Auf der fahrzeugaufbaunahen Seite des Spiegelgehäuses 18 ist an dieses in dem oberen Gehäusebereich ein Gehäuseteil 20 einstückig angeformt, das gemeinsam mit einem Halteteil 21 einen ebenfalls strömungsgünstig gestalteten Haltearm 22 bildet. Gehäuseteil 20 und Halteteil 21 sind um eine zumindest annähernd lotrecht verlaufende Schwenkachse 23 gegeneinander schwenkbar, so daß bei an einem Fahrzeugaufbau befestigtem Halteteil 21 das Spiegelgehäuse 18 aus der Betriebsstellung, in der es im wesentlichen quer zur Fahrzeuglängsrichtung ausgerichtet ist, nach hinten in eine Ausweichstellung geschwenkt werden kann, in der es sich im wesentlichen in Fahrzeuglängsrichtung erstreckt.

Der Haltearm 22 weist einen elliptischen Querschnitt mit wenigstens annähernd waagerecht liegender Ellipse auf. Seine Vorderseite ist zu der Vorderseite des Spiegelgehäuses 18 in dessen oberem Bereich bündig angeordnet. Seine Oberseite verläuft geringfügig niedriger als die Oberseite des Spiegelgehäuses 18. Die Dicke des Haltearms 22 in Höhenrichtung, also der kleine Durchmesser der Ellipse, ist wesentlich geringer als die Höhe des Spiegelgehäuses 18. Die größte Dicke des Haltearms 22 beträgt nur etwa ein Drittel der Höhe des Spiegelgehäuses 18 und kann beispielsweise 32 mm betragen. In Anströmrichtung weist der Haltearm 22 eine größere Erstreckung auf. Seine Breite, also der große Durchmesser der Ellipse, ist etwa eineinhalbmal so groß wie seine größte Dicke und kann beispielsweise 45 mm betragen. Die Länge L des Haltearms 22 ist annähernd so groß wie die Höhe des Spiegelgehäuses 18.

Die dem Fahrzeugaufbau zugewandte Seitenwand 24 des Spiegelgehäuses 18 ist im wesentlichen in Fahrzeuglängsrichtung ausgerichtet. Ihr Abstand von dem ihr benachbarten Fahrzeugaufbauteil nimmt von vorne nach hinten zu. Bei einer Länge der Seitenwand 24 von etwa 80 mm kann der seitliche Abstand vorne 60 mm und hinten 75 mm betragen. In Höhenrichtung ist der Abstand der Seitenwand 24 von dem ihr benachbarten Fahrzeugaufbauteil über ihre gesamte Höhe hinweg annähernd gleich. Sie verläuft also in Höhenrichtung den ihr benachbarten seitlichen Teilen des Fahrzeugaufbaus entsprechend geneigt, entfernt sich aber von vorne nach hinten von diesen Fahrzeugaufbauteilen, so daß in dieser Richtung ein Diffusor gebildet ist. Das Spiegelgehäuse 18 mit seiner Seitenwand 24, der Haltearm 22 und die dem Außenrückblickspiegel 17 benachbarten Fahrzeugaufbauteile bilden demgemäß einen nach unten offenen Luftführungskanal mit über seine Länge zunehmender Breite. Deren Größe wird durch die Länge L des Haltearms 22 bestimmt, die nicht zu gering bemessen sein sollte, damit sich die gewünschte Leitwirkung ergibt.

Der Außenrückblickspiegel 17 kann mit seinem Haltearm 22 an einem Personenkraftwagen mit erheblichem Abstand in Höhenrichtung oberhalb der Seitentürbrüstung an dem vorderen Karosseriepfosten (A-Säule), an den die Wind schutzscheibe anschließt, derart befestigt sein, daß er sich zumindest annähernd waagerecht im wesentlichen quer zur Fahrzeuglängsrichtung mit einer geringen Neigung von der Befestigungsstelle aus nach hinten erstreckt. Die Höhe H, in welcher der Haltearm 22 oberhalb der Seitentürbrüstung angeordnet sein kann, kann derart bemessen sein, daß sich die Unterkante des Spiegelgehäuses 18, das eine Höhe von beispielsweise etwa 110 mm aufweisen kann, annähernd 50 mm oberhalb der Höhe der Seitentürbrüstung befindet, der Abstand der Unterkante des Spiegelgehäuses 18 von der Seitentürbrüstung in Höhenrichtung also annähernd halb so groß wie die Höhe des Spiegelgehäuses 18 ist.

Bei Vorwärtsfahrt wird die anströmende Luft durch den Außenrückblickspiegel 17 mit seinem Spiegelgehäuse 18 und seinem Haltearm 22 nach unten gelenkt. Gleichzeitig wird die anströmende Luft zur Seite von dem Fahrzeugaufbau weg gelenkt. Bei geschlossenem Seitenfenster wirkt der Außenrückblickspiegel 17 demgemäß einem Verschmutzen der Seitenfensterscheibe entgegen. Bei geöffnetem Seitenfenster, bei dem die Seitenfensterscheibe in den Türkorpus abgesenkt ist und die Seitentürbrüstung die obere seitliche Fahrzeugbegrenzung bildet, bewirkt der Außenrückblickspiegel 17 ein Leiten der anströmenden Luft von dem Fahrzeuginsassenraum weg, so daß sich in diesem keine oder nur eine geringe Zugerscheinung auswirken kann. In der gleichen Weise wirkt der Außenrückblickspiegel 17 als Luftleitelement bei einem Fahren mit abgesenkter Seitentür.

In Abweichung von dem Ausführungsbeispiel kann auch bei einem Haltearm, der nicht einen flügelprofilförmigen, sondern einen anderen strömungsgünstigen Querschnitt aufweist, die dem Fahrzeugaufbau zugewandte Seitenwand des Spiegelgehäuses unter Verzicht auf die Diffusorge staltung derart ausgerichtet sein, daß ihr Abstand von dem ihr benachbarten Fahrzeugaufbauteil über ihre Länge in Fahrzeuglängsrichtung hinweg annähernd gleich ist. Andererseits ist es jedoch auch möglich, eine Aufweitung des nach unten offenen Luftführungskanals sowohl nach hinten als auch nach unten zu vorzusehen. Die Höhe H kann von dem bei dem Ausführungsbeispiel angegebenen Wert abweichen. Beispielsweise kann sie derart bemessen sein, daß die Unterkante des Spiegelgehäuses wie bei dem Ausführungsbeispiel nach Fig. 1 bis 5 annähernd auf der Höhe der Seitentürbrüstung angeordnet ist.

Ein dem linken Außenrückblickspiegel spiegelbildlich entsprechender Außenrückblickspiegel kann an der rechten Fahrzeugseite vorgesehen sein.

Bezugszeichenliste

1 Außenrückblickspiegel
2 Spiegelgehäuse
3 Spiegelscheibe
4 Gehäuseteil
5 Halteteil
6 Haltearm
7 Schwenkachse
8 Seitenwand
9 Personenkraftwagen
10 Seitentür
11 Seitentürbrüstung
12 Karosseriepfosten (A-Säule)
13 Windschutzscheibe
14 Luftströmungslinie
15 Luftströmungslinie
16 Luftströmungslinie
17 Außenrückblickspiegel
18 Spiegelgehäuse
19 Spiegelscheibe
20 Gehäuseteil
21 Halteteil
22 Haltearm
23 Schwenkachse
24 Seitenwand
B Breite des Haltearms
H Höhe
L Lange des Haltearms
alpha Neigungswinkel

**Ansprüche**

1. Außenrückblickspiegel für Kraftfahrzeuge, insbesondere Personenkraftwagen, mit einem Spiegelgehäuse, das eine Spiegelscheibe aufnimmt, strömungsgünstig gestaltet ist und eine in einer Betriebsstellung dem Fahrzeugaufbau zugewandte, im wesentlichen in gleicher Richtung wie die benachbarten Fahrzeugaufbauteile ausgerichtete Seitenwand aufweist, und mit einem Haltearm, der in Höhe des unteren Bereichs eines Seitenfensters an dem Fahrzeugaufbau zu befestigen ist, sich in der Betriebsstellung zumindest annähernd waagerecht im wesentlichen quer zur Fahrzeuglängsrichtung erstreckt, an die dem Fahrzeugaufbau zugewandte Seite des Spiegelgehäuses anschließt und dieses trägt und dessen Höhe wesentlich geringer als die des Spiegelgehäuses und dessen Länge mindestens so groß wie seine Erstreckung quer zu seiner Längsrichtung ist,

**dadurch gekennzeichnet,**

daß der Haltearm (6; 22) ein strömungsgünstiges Querschnittsprofil aufweist und an den oberen Teil des Spiegelgehäuses (2; 18) strömungsgünstig anschließt und daß in der Betriebsstellung die dem Fahrzeugaufbau zugewandte Seitenwand (8; 24) des Spiegelgehäuses (2; 18) unterhalb des Haltearms (6; 22) derart ausgerichtet ist, daß ihr Abstand von dem benachbarten Fahrzeugaufbauteil in ihrem hinteren Bereich wenigstens so groß wie in ihrem vorderen Bereich ist.

2. Außenrückblickspiegel nach Anspruch 1, dadurch gekennzeichnet, daß der Abstand der dem Fahrzeugaufbau zugewandten Seitenwand (24) des Spiegelgehäuses (18) unterhalb des Haltearms (22) von dem benachbarten Fahrzeugaufbauteil nach hinten zu zunimmt.

3. Außenrückblickspiegel nach Anspruch 2, dadurch gekennzeichnet, daß der Abstand allmählich zunimmt.

4. Außenrückblickspiegel nach Anspruch 1, 2 oder 3, dadurch gekennzeichnet, daß der Abstand der dem Fahrzeugaufbau zugewandten Seitenwand (8; 24) des Spiegelgehäuses (2; 18) unterhalb des Haltearms (6; 22) von dem benachbarten Fahrzeugaufbauteil über ihre gesamte Höhe zumindest annähernd gleich groß ist.

5. Außenrückblickspiegel nach Anspruch 1, 2 oder 3, dadurch gekennzeichnet, daß der Abstand der dem Fahrzeugaufbau zugewandten Seitenwand des Spiegelgehäuses unterhalb des Haltearms von dem benachbarten Fahrzeugaufbauteil nach unten zu zunimmt.

6. Außenrückblickspiegel nach Anspruch 5, dadurch gekennzeichnet, daß der Abstand allmählich zunimmt.

7. Außenrückblickspiegel nach einem der Ansprüche 1 bis 6, dadurch gekennzeichnet, daß der Haltearm (6) einen flügelprofilförmigen Querschnitt mit nach hinten abnehmender Dicke aufweist, der derart ausgerichtet ist, daß bei Vorwärtsfahrt anströmende Luft nach unten gelenkt wird.

8. Außenrückblickspiegel nach Anspruch 7, dadurch gekennzeichnet, daß der Querschnitt des Haltearms (6) derart nach hinten und unten geneigt angeordnet ist, daß die Profilsehne mit der Waagerechten einen Neigungswinkel (alpha) zwischen 12° und 20°, vorzugsweise einen Neigungswinkel (alpha) von zumindest annähernd 18°, einschließt.

9. Außenrückblickspiegel nach einem der Ansprüche 1 bis 6, dadurch gekennzeichnet, daß der Haltearm (22) einen wenigstens annähernd elliptischen Querschnitt aufweist, dessen Breite größer als seine Dicke ist.

10. Außenrückblickspiegel nach einem der Ansprüche 1 bis 9, dadurch gekennzeichnet, daß die größte Dicke des Haltearms (6; 22) wenigstens annähernd ein Drittel der Höhe des Spiegelgehäuses (2; 18) ist.

11. Außenrückblickspiegel nach einem der Ansprüche 1 bis 10, dadurch gekennzeichnet, daß die Breite (B) des Haltearms (6) wenigstens annähernd doppelt so groß wie seine größte Dicke ist.

12. Außenrückblickspiegel nach einem der Ansprüche 1 bis 11, dadurch gekennzeichnet, daß der Haltearm (6; 22) eine Länge (L) aufweist, die wenigstens annähernd so groß wie die Höhe des Spiegelgehäuses (2; 18) ist.

13. Außenrückblickspiegel nach einem der Ansprüche 1 bis 12, dadurch gekennzeichnet, daß die höchste Stelle der Oberseite des Haltearms (6; 22) und die höchste Stelle der Oberseite des Spiegelgehäuses (2; 18) wenigstens annähernd gleich hoch angeordnet sind.

14. Außenrückblickspiegel nach einem der Ansprüche 1 bis 13, dadurch gekennzeichnet, daß der Haltearm (6; 22) mit erheblichem Abstand oberhalb der Seitentürbrüstung (11) an dem Fahrzeugaufbau befestigt ist.

15. Außenrückblickspiegel nach Anspruch 14, dadurch gekennzeichnet, daß der Haltearm (6) in einer derartigen Höhe an dem Fahrzeugaufbau befestigt ist, daß sich die Unterkante des Spiegelgehäuses (2) wenigstens annähernd auf der Höhe der Seitentürbrüstung (11) befindet.

16. Außenrückblickspiegel nach Anspruch 14, dadurch gekennzeichnet, daß der Haltearm (6; 22) in einer derartigen Höhe an dem Fahrzeugaufbau befestigt ist, daß sich die Unterkante des Spiegelgehäuses (2; 18) um wenigstens annähernd die Hälfte der Höhe des Spiegelgehäuses (2; 18) höher als die Seitentürbrüstung befindet.

17. Außenrückblickspiegel nach Anspruch 14, 15 oder 16, dadurch gekennzeichnet, daß der Haltearm (6; 22) an dem vorderen Karosseriepfosten (12) (A-Säule) befestigt ist.

18. Außenrückblickspiegel nach Anspruch 14, 15 oder 16, dadurch gekennzeichnet, daß der Haltearm (6; 22) an der Seitentür befestigt ist.

Fig. 1

EP 0 333 220 A2

Fig. 2

EP 0 333 220 A2

Fig. 3

Fig. 4

Fig. 5

Fig. 6

17

20

23

22

21

L

24

18

19

EP 0 333 220 A2

22

18

Fig. 7